# EUROPÄISCHE PATENTSCHRIFT

(11) **EP 3 124 780 B1**
(45) Veröffentlichungstag und Bekanntmachung des Hinweises auf die Patenterteilung: **13.09.2017**
(21) Anmeldenummer: 15178882.5
(22) Anmeldetag: 29.07.2015
(51) Int. Cl.: F02M 25/12, F02B 43/10, F02D 19/06, F02D 19/08

(54) **FAHRZEUGANTRIEBSSYSTEM UND VERFAHREN ZUM BETRIEB EINES FAHRZEUGANTRIEBSSYSTEMS**
VEHICLE DRIVE SYSTEM AND METHOD FOR OPERATING A VEHICLE DRIVE SYSTEM
SYSTEME D'ENTRAINEMENT DE VEHICULE ET PROCEDE DE FONCTIONNEMENT D'UN SYSTEME D'ENTRAINEMENT DE VEHICULE

(43) Veröffentlichungstag der Anmeldung: 01.02.2017
(73) Patentinhaber: Fuelsave GmbH, 69190 Walldorf (DE)
(72) Erfinder: HOFFMANN, Dirk, 21244 Buchholz i.d.N. (DE)
(74) Vertreter: Ridderbusch, Oliver

(56) Entgegenhaltungen:
- EP-A1- 2 602 358
- EP-A2- 1 355 049
- WO-A1-2007/085094
- WO-A2-2008/033107
- KR-A- 20110 119 055
- US-A1- 2006 179 819
- US-A1- 2012 067 304

## Beschreibung

Die vorliegende Erfindung bezieht sich auf ein Fahrzeugantriebssystem nach dem Oberbegriff des Anspruchs 1. Außerdem betrifft die Erfindung ein Verfahren zum Betrieb eines Fahrzeugantriebssystems nach dem Oberbegriff des Anspruchs 10.

Fahrzeugantriebssysteme dienen dem Antrieb von Landfahrzeugen, insbesondere von LKWs und anderen Nutzfahrzeugen sowie von Personenkraftwagen. Hierzu umfasst ein Fahrzeugantriebssystem einen Verbrennungsmotor für beispielsweise Dieselkraftstoff. Zudem kann ein Fahrzeugantriebssystem eine Elektrolysekammer umfassen, welche Wasserstoffgas erzeugt. Dieses kann grundsätzlich als Ersatz oder Ergänzung zu Dieselkraftstoff verwendet werden.

So umfasst ein gattungsgemäßes Fahrzeugantriebssystem einen Verbrennungsmotor zum Antreiben eines Fahrzeugs, wobei der Verbrennungsmotor eine Verbrennungskammer mit Einspritzdüsen zum Einspritzen von Diesel in die Verbrennungskammer umfasst. Das Fahrzeugantriebssystem umfasst außerdem eine Elektrolysekammer zum Erzeugen von Wasserstoffgas und Sauerstoffgas sowie eine Unterdruckpumpe zum Absaugen des Wasserstoffgases und des Sauerstoffgases aus der Elektrolysekammer. Mit anderen Worten ist die Unterdruckpumpe so angeordnet, dass sie im Betrieb Wasserstoffgas und Sauerstoffgas aus der Elektrolysekammer absaugt.

Bei einem gattungsgemäßen Verfahren zum Betrieb eines Fahrzeugantriebssystems ist vorgesehen, dass mit einem Verbrennungsmotor ein Fahrzeug angetrieben wird, dass über Einspritzdüsen Diesel in eine Verbrennungskammer des Verbrennungsmotors eingespritzt wird, dass in einer Elektrolysekammer Wasserstoffgas und Sauerstoffgas erzeugt werden und dass mit einer Unterdruckpumpe das Wasserstoffgas und das Sauerstoffgas aus der Elektrolysekammer abgesaugt werden.

Im Stand der Technik sind verschiedene Verfahren zur Nutzung des erzeugten Sauerstoffgases und Wasserstoffgases bekannt.

In EP 1 227 240 A2 wird beschrieben, durch Elektrolyse ein Wasserstoff-/Sauerstoffgemisch zu erzeugen und dieses dem fossilen Kraftstoff eines Verbrennungsmotors eines Fahrzeuges zuzuführen. Das durch die Elektrolyse erzeugte Gasgemisch wird hier direkt dem Ansaugkrümmer oder einer anderen direkt zum Verbrennungsmotor führenden Leitung zugeführt. Nach dem gleichen Prinzip arbeitende Systeme sind in US 5,458,095 A sowie in US 6,257,175 B1 und WO 2011/103925 A1 beschrieben.

Ein System, bei dem durch Elektrolyse gewonnenes Sauerstoffgas einem Verbrennungsmotor zugeführt wird und durch Elektrolyse gewonnenes Wasserstoffgas separat genutzt werden kann, ist aus DE 10 2011 120 137 A1 bekannt.

Weiterhin wird in US 2010/0043730 A1 beschrieben, dass durch Elektrolyse erzeugtes Wasserstoffgas zusammen mit einem fossilen Kraftstoff einem Verbrennungsmotor zugeführt werden kann.

Zur Stickoxidminderung in Abgasen wird in DE 42 37 184 A1 vorgeschlagen, durch Elektrolyse erzeugtes Wasserstoffgas einem Katalysator eines Kraftfahrzeugs zuzuführen, während das erzeugte Sauerstoffgas dem Verbrennungsmotor zugeführt werden kann.

KR 2011 0119055 A, US 2012/0067304 A1, EP 2 602 358 A1, US 2006/0179819 A1 und WO 2008/033107 A2 beschreiben ebenfalls Verbrennungsmotoren, bei denen Wasserstoff- und Sauerstoffgas zur Schadstoffminderung im Abgas verwendet werden.

Zwar wird bei den beschriebenen Schriften durch die Nutzung einer Elektrolyse eine gewisse Effizienzsteigerung oder eine Verringerung von Schadstoffen im Abgas erreicht. Wünschenswert sind aber eine weitere Steigerung der Effizienz von Verbrennungsmotoren sowie eine weitere Reduzierung von Schadstoffen im Abgas.

Als eine **Aufgabe** der Erfindung kann angesehen werden, ein Fahrzeugantriebssystem und ein Verfahren zum Betrieb eines Fahrzeugantriebssystem anzugeben, bei welchen ein Verbrennungsmotor mit möglichst hoher Effizienz arbeitet und möglichst geringe Schadstoffmengen im Abgas ausgibt.

Diese Aufgabe wird durch das Fahrzeugantriebssystem mit den Merkmalen des Anspruchs 1 und durch das Verfahren zum Betrieb eines Fahrzeugantriebssystems mit den Merkmalen des Anspruchs 10 gelöst. Vorteilhafte Varianten des erfindungsgemäßen Fahrzeugantriebssystems und des erfindungsgemäßen Verfahrens sind Gegenstand der abhängigen Ansprüche und werden außerdem in der folgenden Beschreibung erläutert.

Bei dem Fahrzeugantriebssystem der oben genannten Art ist erfindungsgemäß ein Vergasungstank vorhanden, in welchem eine flüchtige organische Verbindung, insbesondere Methanol oder Ethanol, vorhanden ist und dort vergast wird. Zudem ist eine Versorgungsleitung zum Zuführen eines Gasgemisches zur Verbrennungskammer vorhanden, wobei das Gasgemisch vergaste organische Verbindungen (das heißt einen in Gasform übergegangenen Teil der flüchtigen organischen Verbindungen aus dem Vergasungstank) sowie zumindest einen Teil des in der Elektrolysekammer erzeugten Wasserstoffgases und Sauerstoffgases umfasst. Die Versorgungsieitung und der Vergasungstank sind also so angeordnet, dass im Betrieb des Fahrzeugantriebssystems ein Gasgemisch, wie oben definiert, zur Verbrennungskammer geleitet wird.

Das Verfahren der oben genannten Art ist erfindungsgemäß dadurch weitergebildet, dass in einem Vergasungstank flüchtige organische Verbindungen, insbesondere Methanol oder Ethanol, vergast werden und dass ein Gasgemisch, welches vergaste organische Verbindungen sowie zumindest einen Teil des in der Elektrolysekammer erzeugten Wasserstoffgases und Sauerstoffgases umfasst, in die Verbrennungskammer geleitet wird.

Als ein wesentlicher Gedanke der Erfindung werden Wasserstoffgas und Sauerstoffgas, welche durch Elektrolyse erzeugt werden, nur zusammen mit gasförmigen flüchtigen organischen Verbindungen, also insbesondere zusammen mit in Gasform überführtes Methanol und/oder Ethanol, in die Verbrennungskammer geleitet. Ein solches Gasgemisch kann eine NOₓ-Erzeugung reduzieren und eine besonders schnelle Verbrennung von Diesel in der Verbrennungskammer bewirken. Durch eine schnellere Verbrennung kann ein höherer Druck zu einem bestimmten Zeitpunkt erzeugt werden, womit schlussendlich eine effizientere Kraftübertragung möglich ist.

Die flüchtigen organischen Verbindungen können prinzipiell eine bestimmte organische Verbindung oder ein Gemisch verschiedener organischer Verbindungen sein. Unter "flüchtigen" organischen Verbindungen können alle organischen Verbindungen angesehen werden, welche bei Raumtemperatur überwiegend gasförmig sind und/oder einen Siedebereich unter 100°C oder unter 200°C oder 300°C aufweisen. Organische Verbindungen können insbesondere Kohlenwasserstoffe sein und/oder alle Verbindungen, die überwiegend aus Wasserstoff- und Kohlenstoffatomen bestehen. Beispiele von solchen organischen Verbindungen sind Alkanole (wie Methanol und Ethanol) oder Alkane (wie Methan oder Ethan).

Unter dem Vergasungstank kann prinzipiell ein beliebiger Behälter verstanden werden, in welchem flüchtige organische Verbindungen aufgenommen sind. Diese können dort zumindest teilweise von flüssiger Form in Gasform übergehen. Vorzugsweise sind die Unterdruckpumpe und der Vergasungstank so angeordnet, dass das Wasserstoffgas und das Sauerstoffgas zumindest teilweise mittels der Unterdruckpumpe von der Elektrolysekammer in den Vergasungstank befördert werden. Das Gasgemisch wird dann folglich im Vergasungstank erzeugt. Die Versorgungsleitung kann daher beim Vergasungstank beginnen und von dort das Gasgemisch in Richtung der Verbrennungskammer befördern.

Zweckmäßigerweise kann der Vergasungstank daher einen Einlass umfassen, welcher mit der Elektrolysekammer verbunden ist, einen Auslass, aus welchem in Gasform übergegangene organische Verbindungen sowie durchgeleitetes Wasserstoff- und Sauerstoffgas ausgegeben werden, sowie eine verschließbare Befüllungsöffnung zum Nachfüllen von als Flüssigkeit vorliegende organische Verbindungen, beispielsweise Ethanol.

Wasserstoffgas und Sauerstoffgas werden in den Vergasungstank vorzugsweise über mehrere Düsen eingeleitet, welche sich in einem unteren Teil des Vergasungstanks befinden. Als unterer Teil kann insbesondere die untere Hälfte oder das untere Viertel des Vergasungstanks angesehen werden. Durch diese Einleitung im unteren Teil kommt es vorteilhafterweise zu einer stärkeren Vergasung. Indem mehrere Düsen genutzt werden, können die eingeleiteten Gase gleichmäßiger verteilt den Vergasungstank durchströmen, was ebenfalls für eine stärkere Vergasung vorteilhaft ist.

Die Versorgungsleitung selbst kann zwar direkt bis zur Verbrennungskammer laufen. Grundsätzlich genügt es, wenn die Versorgungsleitung mit einer Leitungseinrichtung verbunden ist, welche das Gasgemisch zur Verbrennungskammer leiten kann. Es ist bevorzugt, wenn die Versorgungsleitung mit einer Luftansaugkomponente des Verbrennungsmotors verbunden ist.

So ist bei einer bevorzugten Ausgestaltung der Erfindung ein Turbolader vorhanden und die Versorgungsleitung ist so gestaltet, dass das Gasgemisch über einen Verdichter des Turboladers zur Verbrennungskammer leitbar ist. Als Vorteil können hierdurch die Verbrennungskammer und direkt daran angrenzende Komponenten des erfindungsgemäßen Fahrzeugantriebssystems gleich gestaltet sein wie bei herkömmlichen Fahrzeugantriebssystemen. Zudem ermöglicht diese Ausgestaltung der Erfindung eine besonders wirkungsvolle Steuerung der Menge an Gasgemisch, die in die Verbrennungskammer geleitet wird. Dies wird später näher beschrieben.

Unter der Elektrolysekammer kann allgemein eine beliebige Vorrichtung verstanden werden, welche unter Nutzung von elektrischer Energie Wasserstoffgas und Sauerstoffgas erzeugt, also insbesondere H₂ und O₂. Als Ausgangsstoff der Elektrolyse kann Wasser oder eine wasserhaltige Mischung verwendet werden. Es kann vorteilhaft sein, wenn die Elektrolysekammer und ein Leitungssystem von der Elektrolysekammer zum Vergasungstank so gebildet sind, dass erzeugtes Wasserstoffgas und Sauerstoffgas ungetrennt als Knallgas beförderbar sind. Hierdurch ist bei vergleichsweise einfacher Konstruktion eine zeitlich exakte Zündung in der Verbrennungskammer durch Einleiten dieses Knallgases möglich.

Zwischen der Elektrolysekammer und der Unterdruckpumpe kann eine Kondensatsfalle, das heißt ein Kondensatssammler, angeordnet sein. In diesem kann eine Trennung zwischen einem Elektrolyt und dem erzeugten Wasserstoff-/Sauerstoffgemisch erfolgen. So kondensiert in der Kondensatsfalle das Elektrolyt und kann sodann über eine Elektrolyt-Zirkulationspumpe zurück in die Elektrolysekammer gepumpt werden. Vorteilhafterweise wird somit durch die Kondensatsfalle der Verbrennungsmotor vor einem Flüssigkeitseintritt geschützt. Gasförmig vorliegendes Wasserstoff- und Sauerstoffgas wird hingegen aus der Kondensatsfalle durch die Unterdruckpumpe abgesaugt.

Die Unterdruckpumpe kann eine Pumpe prinzipiell beliebiger Bauart sein. Sie erzeugt einen Unterdruck, durch welchen Wasserstoffgas und Sauerstoffgas aus der Elektrolysekammer abgesaugt werden. Die Unterdruckpumpe kann auch aus mehreren Pumpeinheiten bestehen. Dies ist insbesondere vorteilhaft, wenn erzeugtes Wasserstoffgas und Sauerstoffgas getrennt, also nicht als Knallgas, abgesaugt werden.

Außer einem Weiterleiten von Wasserstoffgas und Sauerstoffgas aus der Elektrolysekammer kann die Unterdruckpumpe auch den Wirkungsgrad der Elektrolysekammer erhöhen. So ist es für eine Elektrolyse wünschenswert, dass Elektroden der Elektrolysekammer von flüssigem Elektrolyt umgeben sind. Blasenbildungen, also Gase wie zum Beispiel erzeugtes Wasserstoff- und Sauerstoffgas, hindern die Elektrolyse und machen höhere Temperaturen erforderlich. Dies kann bei einer bevorzugten Ausführungsform der Erfindung verhindert werden, indem in der Elektrolysekammer durch die Unterdruckpumpe ein Unterdruck erzeugt wird, insbesondere ein Druck unter 1 bar, insbesondere zwischen 200 mbar und 700 mbar, insbesondere zwischen 300 mbar und 600 mbar oder zwischen 340 mbar und 580 mbar. Durch solch einen verhältnismäßig niedrigen Druck kann die Elektrolysekammer bei einer Temperatur von unter 40°C, insbesondere bei 38 bis 39°C betrieben werden, womit ein Wirkungsgrad der Elektrolyse erhöht wird.

Die Unterdruckpumpe kann so betrieben werden, dass sie aus der Elektrolysekammer so viel Gas (insbesondere entstehendes Wasserstoff- und Sauerstoffgas) absaugt, dass im Betrieb der Elektrolysekammer höchstens ein Viertel der Elektrolysekammer, bevorzugt höchstens 10 Prozent der Elektrolysekammer, mit Gas gefüllt ist.

Der Verbrennungsmotor des Fahrzeugantriebssystems kann ein in prinzipiell bekannter Weise gebildeter Motor sein, welcher durch Verbrennung eines (insbesondere fossilen) Energieträgers Wärmeenergie und damit Bewegungsenergie zum Antreiben des Fahrzeugs erzeugt. Hierbei wird zumindest auch Diesel, das heißt ein Dieselkraftstoff, injiziert. Die genaue Zusammensetzung des Dieselkraftstoffes kann in im Wesentlichen bekannter Weise variabel sein.

Das Fahrzeugantriebssystem kann auch einen Abgasfilter zum Reinigen von Abgasen umfassen, beispielsweise einen Rußpartikelfilter. Für eine möglichst hohe Lebensdauer eines Abgasfilters und eine effiziente Wirkung ist die Reinigung des Abgasfilters wichtig. Dies kann mit Sauerstoff, O₂, erreicht werden. Wird dieses dem Abgas vorm Abgasfilter zugefügt, kann es am Filter als Radikal wirken und so bei der Säuberung des Filters dienen. Dies wird bei einer bevorzugten Ausführungsform der Erfindung umgesetzt. Hier kann ein Trennmittel, etwa ein Diaphragma, vorhanden sein, zum Trennen von dem Wasserstoffgas und dem Sauerstoffgas, welche in der Elektrolysekammer erzeugbar sind. Zudem ist eine Leitung zum Leiten eines Anteils des Sauerstoffgases zum Abgasfilter vorhanden, wobei das von der Versorgungsleitung zur Verbrennungskammer geleitete Gasgemisch das übrige Sauerstoffgas (also den Anteil des Sauerstoffgases, welcher nicht zum Abgasfilter geleitet wird) und das Wasserstoffgas sowie die vergasten organischen Verbindungen umfassen kann.

Die Trennung des erzeugten Sauerstoffgases und Wasserstoffgases kann hierbei an prinzipiell beliebiger Stelle erfolgen. Es ist auch möglich, dass Sauerstoffgas und Wasserstoffgas von der Elektrolysekammer ungetrennt zur Verbrennungskammer geleitet werden, während ein Anteil dieses Knallgasgemisches (das heißt des Gemisches mit Sauerstoffgas und Wasserstoffgas) in eine separate Leitung abgezweigt und erst dort mit dem Trennmittel in Sauerstoffgas und getrennt hiervon vorliegendes Wasserstoffgas getrennt wird.

Zweckmäßigerweise wird die Elektrolysekammer mit einem elektrischen Strom versorgt, durch welchen in der Elektrolysekammer das Wasserstoffgas und das Sauerstoffgas gewonnen werden. Zudem wird Wasser eingeleitet, aus welchem das Wasserstoffgas und das Sauerstoffgas erzeugt werden. Vorzugsweise sind Steuermittel vorhanden und dazu eingerichtet, den elektrischen Strom und/oder eine Wassereinleitung in die Elektrolysekammer und/oder eine Pumpleistung der Unterdruckpumpe abhängig von einer momentanen Eigenschaft eines Verbrennungsmotorbetriebs zu steuern. Die Steuerung kann insbesondere so erfolgen, dass die Menge an eingeleitetem Gasgemisch umso größer ist, je mehr Diesel in einem bestimmten Zeitraum eingespritzt wird. Das erzeugte Gasgemisch dient demnach nicht als Ersatz für einen fossilen Brennträger. Vielmehr wird das Gasgemisch als Zusatz genutzt, welcher den Verbrennungsvorgang in wünschenswerter Weise beeinflusst. Die Steuermittel können den Strom und die Pumpleistung insbesondere so einstellen, dass ein Verhältnis von eingespritztem Diesel zu dem eingeleiteten Gasgemisch im Wesentlichen konstant ist, also im Wesentlichen unabhängig ist von einer Einspritzrate und einer eingespritzten Dieselmenge. Unter "im Wesentlichen konstant" können Schwankungen bis höchstens 10%, vorzugsweise höchstens 5%, des vorgenannten Verhältnisses angesehen werden.

Bei einer bevorzugten Ausgestaltung sind die Steuermittel dazu eingerichtet, als momentane Eigenschaft des Verbrennungsmotorbetriebs, in Abhängigkeit von welcher der elektrische Strom und die Pumpleistung gesteuert werden, einen Ladedruck des Verbrennungsmotors zu nutzen. Dabei bezeichnet der Ladedruck einen Luftdruck in einer Ansaugleitung des Verbrennungsmotors. Die Steuermittel können nun dazu eingerichtet sein, den elektrischen Strom und die Pumpleistung umso größer einzustellen, je höher der Ladedruck ist. Anstelle des Ladedrucks kann prinzipiell auch ein anderer hiervon abhängiger Druck für die Steuerung verwendet werden, beispielsweise ein Abgasdruck, insbesondere vor einem Turbolader. Um den Ladedruck und/oder einen anderen für die Steuerung genutzten Druck zu erfassen, können zweckmäßigerweise entsprechende Druckmessmittel vorhanden sein. Auch kann anstelle eines Drucks eine mit der Motorenleistung verbundene Größe für die Steuerung genutzt werden, beispielsweise eine Gaspedalsignal oder eine Motordrehzahl. Unter Umständen kann es jedoch bei Nutzung solcher elektrischer Signale leichter zu Fehlern kommen als bei einer Steuerung über den (Lade-)Druck.

Vorzugsweise ist weiterhin eine Luftpumpe zum Pumpen von Luft in den Vergasungstank vorhanden. Bei der Luft kann es sich um Umgebungsluft, insbesondere um ein Gemisch beliebiger Gase, handeln. Je mehr Luft in den Vergasungstank gepumpt wird, desto größer ist die Menge vergaster organischer Verbindungen. Dadurch wird die Menge des erzeugten Gasgemisches erhöht. Dies ist wünschenswert, wenn im Verbrennungsmotor mit besonders großer Rate ein fossiler Brennstoff verbrannt wird und demgemäß eine besonders große Menge an erzeugtem Gasgemisch zugeleitet werden sollte.

Um bei einer größeren Menge von eingespritztem Diesel auch eine größere Menge an erzeugtem Gasgemisch zuzuführen, ist es bevorzugt, dass die Unterdruckpumpe mit steigender Pumpleistung betrieben wird, wenn der Ladedruck steigt. Es kann vorgesehen sein, dass die Unterdruckpumpe mit maximaler Pumpleistung betrieben wird, wenn der Ladedruck einen vorgegebenen Ladedruckwert erreicht. Steigt nun der Ladedruck über diesen vorgegebenen Ladedruckwert, wäre es wünschenswert, eine noch größere Menge an Gasgemisch zuzuführen. Die Menge an Sauerstoffgas und Wasserstoffgas ist zwar durch die Unterdruckpumpe und die Elektrolysekammer beschränkt, eine größere Menge vergaster organischer Verbindungen kann aber mit Hilfe der Luftpumpe zugeführt werden. Daher kann vorgesehen sein, dass zusätzlich die Luftpumpe betrieben wird, wenn der Ladedruck über den vorgegebenen Ladedruckwert steigt. Insbesondere kann eine Leistung der Luftpumpe umso höher eingestellt werden, je weiter der Ladedruck über den vorgegebenen Ladedruckwert steigt. Hierbei wird stets die Unterdruckpumpe mit maximaler Pumpleistung betrieben. Durch die Luftpumpe ändert sich zwar die Zusammensetzung des Gasgemisches, dies ist aber gleichwohl besser als eine unzureichend große Menge an verfügbarem Gasgemisch. Bei dieser Steuerung kann anstelle des Ladedrucks auch ein anderer Druck verwendet werden, welcher vom Ladedruck abhängt (beispielsweise ein Abgasdruck). Zudem kann anstelle des Ladedrucks auch eine andere Größe verwendet werden, die mit steigender Motorenleistung steigt, beispielsweise die Motordrehzahl.

Es kann bevorzugt sein, dass ein Vorratstank vorhanden und mit dem Vergasungstank verbunden ist. Der Vorratstank enthält organische Verbindungen und dient dem Befüllen des Vergasungstanks. Alternativ kann aber auch ein manuelles Befüllen des Vergasungstanks über eine verschließbare Öffnung am Vergasungstank vorgesehen sein.

Vorteilhafterweise kann durch das Einleiten des Gasgemisches eine Zündung von eingespritztem Diesel in der Verbrennungskammer bewirkt werden. Durch das Gasgemisch, welches Knallgas umfasst, kann die Verbrennung schneller erfolgen. Es kann bevorzugt sein, dass ein Zündzeitpunkt bei einem Kurbelwellenwinkel von kleiner 20°, insbesondere zwischen 17° und 19°, insbesondere zwischen 17,5° und 18,5° vor dem oberen Totpunkt (eines Kolbens des Verbrennungsmotors) bewirkt wird. Dieser Zündzeitpunkt kann durch den Zeitpunkt des Einleitens des Gasgemisches in die Verbrennungskammer vorgegeben und gesteuert werden. Bei dieser Ausführung erfolgt somit der Zündzeitpunkt knapper vor dem oberen Totpunkt als üblicherweise. Ein solcher späterer Zündzeitpunkt kann gewählt werden, da die Verbrennung bei der Erfindung besonders schnell abläuft. Zu einem gewünschten Zeitpunkt kann so ein höherer Druck erzeugt werden.

Die Erfindung betrifft weiterhin ein Landfahrzeug, beispielsweise einen Lastkraftwagen, einen Personenkraftwagen, einen Bagger oder ein anderes Nutzfahrzeug, mit einem wie hierin beschrieben gebildeten Fahrzeugantriebssystem.

Durch den bestimmungsgemäßen Gebrauch der beschriebenen Ausführungsformen des Fahrzeugantriebsystems ergeben sich Varianten des erfindungsgemäßen Verfahrens. Zudem sind bevorzugte Ausführungsformen des erfindungsgemäßen Fahrzeugantriebsystems, insbesondere dessen Steuermittel, eingerichtet zum Ausführen der beschriebenen Varianten des erfindungsgemäßen Verfahrens.

Weitere Vorteile und Merkmale der Erfindung werden nachstehend mit Bezug auf die beigefügte schematische Figur beschrieben. Hierbei zeigt:

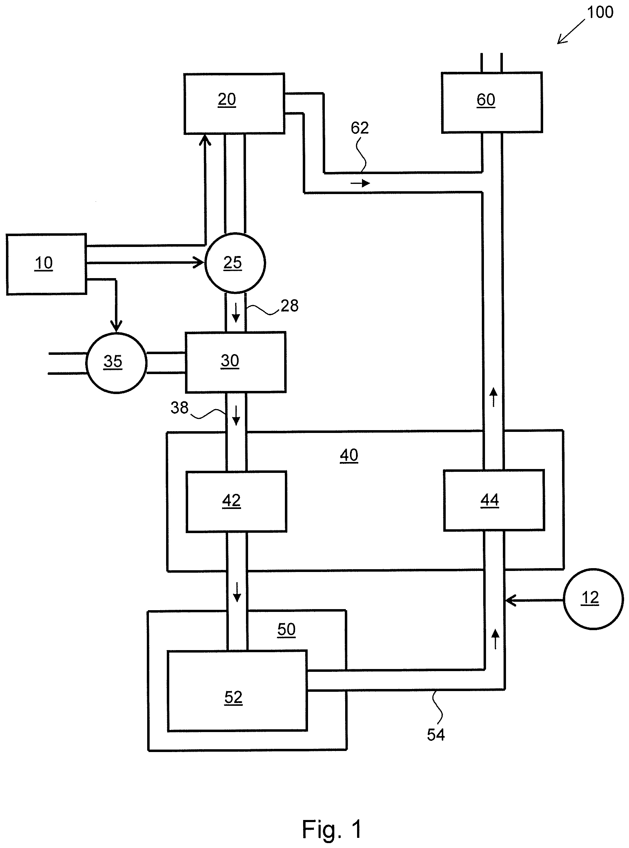

- Fig.1: eine schematische Darstellung eines Ausführungsbeispiels eines erfindungsgemäßen Fahrzeugantriebsystems.

Fig. 1 zeigt schematisch ein Ausführungsbeispiel eines erfindungsgemäßen Fahrzeugantriebsystems 100. Dieses kann Bestandteil eines hier nicht dargestellten Landfahrzeugs sein, beispielsweise eines Lastkraftwagens.

Als wesentliche Komponenten umfasst das Fahrzeugantriebsystem eine Elektrolysekammer 20 zum Erzeugen von Wasserstoffgas und Sauerstoffgas, einen Vergasungstank 30 zum Vergasen von flüchtigen organischen Verbindungen sowie einen Verbrennungsmotor 50, dem außer einem fossilen Brennträger auch das erzeugte Wasserstoffgas, das Sauerstoffgas und die gasförmigen organischen Verbindungen zugeführt werden.

Durch die Zugabe dieses Gasgemisches kann die Verbrennung von Diesel oder auch einem anderen fossilen Brennstoff schneller erfolgen und es entstehen weniger Schadstoffe, die im Abgas ausgegeben werden.

Zunächst werden in der Elektrolysekammer 20 Wasser oder ein anderer Ausgangsstoff mit Hilfe von elektrischer Energie in Wasserstoffgas, Sauerstoffgas und eventuell weitere Bestandteile umgewandelt.

Über ein Leitungssystem 28 werden das erzeugte Wasserstoffgas und das erzeugte Sauerstoffgas befördert. Diese beiden Gase können insbesondere als Gemisch, das heißt als Knallgas, vorliegen. Zur Weiterleitung ist im Leitungssystem 28 eine Unterdruckpumpe 25 vorhanden. Diese erzeugt in der Elektrolysekammer 20 einen Unterdruck, wodurch das Sauerstoffgas und das Wasserstoffgas abgesaugt werden.

Außerdem bewirkt der Unterdruck in der Elektrolysekammer 20, dass geringere Mengen an Elektrolyt, welches in der Elektrolysekammer 20 vorhanden ist, von der flüssigen Phase in Gasform übergehen. Dadurch kann der Wirkungsgrad der Elektrolysekammer 20 erhöht werden.

Das Leitungssystem 28 führt das Sauerstoffgas und das Wasserstoffgas zu dem Vergasungstank 30. In diesem befinden sich organische Verbindungen, beispielsweise Methanol und/oder Ethanol, welche durch die Einleitung des Wasserstoffgases und des Sauerstoffgases eine Oberflächenvergasung erfahren. Hierfür werden das Wasserstoffgas und das Sauerstoffgas in einem unteren Teil, insbesondere am Boden, des Vergasungstanks 30 in diesen eingeleitet. In dem Vergasungstank 30 wird so ein Gasgemisch erzeugt, welches zumindest Wasserstoffgas, Sauerstoffgas und vergaste organische Verbindungen, insbesondere Methanol und/oder Ethanol, umfasst. Dieses Gasgemisch wird sodann über eine Versorgungsleitung 38 weitergleitet.

Die Versorgungsleitung 38 führt das erzeugte Gasgemisch zu einem Verdichter 42 eines Turboladers 40. Hierbei kann das Gasgemisch zusammen mit Umgebungsluft zu dem Verdichter 42 geführt werden. Für diese Zusammenführung kann eine entsprechende Leitung vorhanden sein (nicht dargestellt). Von dem Turbolader 40 gelangt das Gasgemisch in eine Verbrennungskammer 52 des Verbrennungsmotors 50. In der Verbrennungskammer 52 entzündet sich das Gasgemisch und bewirkt eine Verbrennung von ebenfalls eingespritztem Dieselkraftstoff.

Abgase werden von der Verbrennungskammer 52 über eine Abgasleitung 54 zu einer Abgasturbine 44 des Turboladers 40 geführt. Ein Druck des Abgases wird daher von der Abgasturbine 44 genutzt, um mit dem Verdichter 42 das Gasgemisch in Richtung des Verbrennungsmotors 50 zu befördern. Hinter der Abgasturbine 44 gelangt das Abgas zu einem Abgasfilter 60.

Eine Zufuhr des Gasgemisches in die Verbrennungskammer 52 soll umso größer sein, je größer die Menge an injiziertem Dieselkraftstoff ist. Hierfür wird unter anderem der Turbolader 40 genutzt. Der Verdichter 42 des Turboladers 40 wird durch die Abgasturbine 44 angetrieben. Diese treibt den Verdichter 42 umso stärker an, je höher ein Abgasdruck an der Abgasturbine 44 ist. Werden nur geringe Dieselmengen in der Verbrennungskammer 52 verbrannt, so ist folglich der Druck an der Abgasturbine 44 gering und der Verdichter 42 erzeugt auch nur eine geringe Ansaugung in der Versorgungsleitung 38. Werden hingegen größere Mengen an Diesel in der Verbrennungskammer 52 verbrannt, wird der Verdichter 42 eine stärkere Ansaugung des Gasgemisches aus der Versorgungsleitung 38 bewirken.

Darüber hinaus kann die Menge an erzeugtem Gasgemisch bedarfsgerecht gesteuert werden. Hierzu sind Steuermittel 10 vorhanden, welche insbesondere einen elektrischen Strom durch die Elektrolysekammer 20 einstellen können und somit die Menge an erzeugtem Wasserstoffgas und Sauerstoffgas vorgeben können. Zudem können die Steuermittel 10 die Unterdruckpumpe 25 steuern und somit einstellen, wieviel Wasserstoffgas und Sauerstoffgas aus der Elektrolysekammer 20 in den Vergasungstank 30 befördert wird. Um die Menge an erzeugtem Gasgemisch zu vergrößern, kann ein größerer elektrischer Strom und eine höhere Pumpleistung der Unterdruckpumpe 25 eingestellt werden. Die Menge an erzeugtem Gasgemisch kann umso größer eingestellt werden, je höher die Rate oder Menge an eingespritztem Diesel in die Verbrennungskammer 52 ist. Als Maß hierfür kann der Ladedruck des Verbrennungsmotors 50 genutzt werden. So können die Steuermittel 10 dazu eingerichtet sein, mit steigendem Ladedruck die Pumpleistung der Unterdruckpumpe 25 und den elektrischen Strom in der Elektrolysekammer 20 zu erhöhen. Entsprechende Druckmessmittel können vorhanden sein. Im dargestellten Beispiel sind Druckmessmittel 12 vorgesehen, welche einen Abgasdruck vor dem Turbolader 40 messen. Auch dieser Abgasdruck kann zur Steuerung der erzeugten Menge an Gasgemisch genutzt werden.

Es kann wünschenswert sein, noch größere Mengen an Gasgemisch dem Turbolader 40 zuzuführen, als bei einem maximalen Strom durch die Elektrolysekammer 20 und maximaler Pumpleistung der Unterdruckpumpe 25 möglich ist. Insbesondere für einen solchen Fall ist zusätzlich eine Luftpumpe 35 vorhanden. Diese pumpt Luft, insbesondere Umgebungsluft, in den Vergasungstank 30 und bewirkt so eine verstärkte Vergasung der organischen Verbindungen. Es kann vorteilhaft sein, wenn eine Leitung von der Luftpumpe 35 und das Leitungssystem 28 an der Unterdruckpumpe 25 in eine gemeinsame Leitung münden, so dass Luft von der Luftpumpe 35 und das durch Elektrolyse gewonnene Wasserstoffgas und Sauerstoffgas über dieselben Düsen in den Vergasungstank 30 eingeleitet werden. Bei anderen Ausführungen kann es aber auch vorteilhaft sein, wenn die Luft von der Luftpumpe 35 und das erzeugte Wasserstoffgas und Sauerstoffgas über getrennte Leitungen in den Vergasungstank 30 gelangen.

Eine Pumpleistung der Luftpumpe 35 wird ebenfalls über die Steuermittel 10 eingestellt. Es kann vorgesehen sein, dass die Luftpumpe 35 erst dann betrieben wird, wenn die Elektrolysekammer 20 mit maximalem Strom versorgt wird und die Unterdruckpumpe 25 mit maximaler Pumpleistung arbeitet.

Um den Abgasfilter 60 besonders effektiv zu reinigen, kann er mit Sauerstoffgas von der Elektrolysekammer 20 versorgt werden. Bei der dargestellten Ausführungsform ist hierfür eine Leitung 62 vorhanden, welche von der Elektrolysekammer 20 zum Abgasfilter 60 führt. Je nach Ausführungsbeispiel kann eine Gestaltung der Elektrolysekammer 20 bevorzugt sein, bei welcher entweder Sauerstoffgas vom Wasserstoffgas getrennt und ohne dieses über die Leitung 62 befördert wird, oder bei welcher Sauerstoffgas und Wasserstoffgas gemeinsam über die Leitung 62 befördert werden.

Indem das erzeugte Gasgemisch dem fossilen Energieträger in der Verbrennungskammer 52 zugeführt wird, kann eine besonders schnelle Verbrennung erfolgen. Hierdurch kann die Zündung besonders kurz vor einem oberen Totpunkt eines Kolbens des Verbrennungsmotors 50 erfolgen, womit ein höherer Wirkungsgrad möglich ist. Zudem sinkt die Menge an erzeugten Schadstoffen im Abgas.

## Patentansprüche

1. Fahrzeugantriebssystem mit
einem Verbrennungsmotor (50) zum Antreiben eines Fahrzeugs,
wobei der Verbrennungsmotor (50) eine Verbrennungskammer (52) mit Einspritzdüsen zum Einspritzen von Diesel in die Verbrennungskammer (52) umfasst, einer Versorgungsleitung (38) zum Zuführen eines Gasgemisches zur Verbrennungskammer (52), einer Elektrolysekammer (20) zum Erzeugen von Wasserstoffgas und Sauerstoffgas und
einer Unterdruckpumpe (25) zum Absaugen des Wasserstoffgases und des Sauerstoffgases aus der Elektrolysekammer (20),
**dadurch gekennzeichnet,**
**dass** ein Vergasungstank (30) mit darin aufgenommenen flüchtigen organischen Verbindungen, insbesondere Methanol oder Ethanol, vorgesehen ist, dass eine Luftpumpe (35) zum Pumpen von Luft in den Vergasungstank (30) vorhanden ist und
**dass** das Gasgemisch vergaste organische Verbindungen aus dem Vergasungstank (30) sowie zumindest einen Teil des Wasserstoffgases und des Sauerstoffgases umfasst.

2. Fahrzeugantriebssystem nach Anspruch 1,
**dadurch gekennzeichnet,**
**dass** die Unterdruckpumpe (25) und der Vergasungstank (30) so angeordnet sind, dass das Wasserstoffgas und das Sauerstoffgas zumindest teilweise durch die Unterdruckpumpe (25) von der Elektrolysekammer (20) in den Vergasungstank (30) beförderbar sind zum Erzeugen des Gasgemisches.

3. Fahrzeugantriebssystem nach einem der Ansprüche 1 bis 2,
**dadurch gekennzeichnet,**
**dass** die Elektrolysekammer (20) und ein Leitungssystem von der Elektrolysekammer (20) zum Vergasungstank (30) so gebildet sind, dass Wasserstoffgas und Sauerstoffgas ungetrennt als Knallgas beförderbar sind.

4. Fahrzeugantriebssystem nach einem der Ansprüche 1 bis 3,
**dadurch gekennzeichnet,**
**dass** ein Turbolader (40) vorhanden ist,
**dass** die Versorgungsleitung (38) so gestaltet ist, dass das Gasgemisch über einen Verdichter (42) des Turboladers (40) zur Verbrennungskammer (52) leitbar ist.

5. Fahrzeugantriebssystem nach einem der Ansprüche 1 bis 4,
**dadurch gekennzeichnet,**
**dass** das in den Vergasungstank (30) geleitete Wasserstoffgas und Sauerstoffgas über mehrere Düsen in einem unteren Teil des Vergasungstanks (30) eingeleitet werden.

6. Fahrzeugantriebssystem nach einem der Ansprüche 1 bis 5,
**dadurch gekennzeichnet,**
**dass** ein Abgasfilter (60) zum Reinigen von Abgasen vorhanden ist,
**dass** ein Trennmittel vorhanden ist zum Trennen von dem Wasserstoffgas und dem Sauerstoffgas, welche in der Elektrolysekammer (20) erzeugbar sind, dass eine Leitung (62) zum Leiten eines Anteils des Sauerstoffgases zum Abgasfilter (60) vorhanden ist,
wobei das von der Versorgungsleitung (38) zur Verbrennungskammer (52) geleitete Gasgemisch das übrige Sauerstoffgas und das Wasserstoffgas sowie die vergasten organischen Verbindungen umfasst.

7. Fahrzeugantriebssystem nach einem der Ansprüche 1 bis 6,
**dadurch gekennzeichnet,**
**dass** die Elektrolysekammer (20) mit einem elektrischen Strom versorgt wird, durch welchen in der Elektrolysekammer (20) das Wasserstoffgas und das Sauerstoffgas gewonnen werden, und
**dass** Steuermittel (10) vorhanden und dazu eingerichtet sind, den elektrischen Strom und/oder eine Wassereinleitung in die Elektrolysekammer (20) und/oder eine Pumpleistung der Unterdruckpumpe (25) abhängig von einer momentanen Eigenschaft eines Verbrennungsmotorbetriebs zu steuern.

8. Fahrzeugantriebssystem nach Anspruch 7,
**dadurch gekennzeichnet,**
**dass** die Steuermittel (10) dazu eingerichtet sind, als momentane Eigenschaft des Verbrennungsmotorbetriebs, in Abhängigkeit von welcher der elektrische Strom, die Wassereinleitung und/oder die Pumpleistung gesteuert werden, einen Ladedruck des Verbrennungsmotors (50) zu nutzen, und
**dass** die Steuermittel (10) dazu eingerichtet sind, den elektrischen Strom und die Pumpleistung umso größer einzustellen, je höher der Ladedruck ist.

9. Landfahrzeug
mit einem Fahrzeugantriebssystem nach einem der Ansprüche 1 bis 8.

10. Verfahren zum Betrieb eines Fahrzeugantriebssystems,
bei dem mit einem Verbrennungsmotor (50) ein Fahrzeug angetrieben wird, bei dem über Einspritzdüsen Diesel in eine Verbrennungskammer (52) des Verbrennungsmotors (50) eingespritzt wird,
bei dem in einer Elektrolysekammer (20) Wasserstoffgas und Sauerstoffgas erzeugt werden,
bei dem mit einer Unterdruckpumpe (25) das Wasserstoffgas und das Sauerstoffgas aus der Elektrolysekammer (20) abgesaugt werden,
**dadurch gekennzeichnet,**
**dass** in einem Vergasungstank (30) flüchtige organische Verbindungen, insbesondere Methanol oder Ethanol, vergast werden,
**dass** in den Vergasungstank (30) Luft mit einer Luftpumpe (35) gepumpt wird und
**dass** ein Gasgemisch, welches vergaste organische Verbindungen sowie zumindest einen Teil des Wasserstoffgases und des Sauerstoffgases umfasst, in die Verbrennungskammer (52) geleitet wird.

11. Verfahren nach Anspruch 10,
**dadurch gekennzeichnet,**
**dass** in der Elektrolysekammer (20) durch die Unterdruckpumpe (25) ein Unterdruck erzeugt wird, insbesondere ein Druck unter 1 bar, insbesondere zwischen 200 mbar und 700 mbar, insbesondere zwischen 300 mbar und 600 mbar.

12. Verfahren nach Anspruch 10 oder 11,
**dadurch gekennzeichnet,**
**dass** die Unterdruckpumpe (25) aus der Elektrolysekammer (20) so viel Gas absaugt, dass im Betrieb der Elektrolysekammer (20) höchstens ein Viertel der Elektrolysekammer mit Gas gefüllt ist.

13. Verfahren nach einem der Ansprüche 10 bis 12,
**dadurch gekennzeichnet,**
**dass** ein Zündzeitpunkt bei einem Kurbelwellenwinkel von kleiner 20°, insbesondere zwischen 17° und 19°, insbesondere zwischen 17,5° und 18,5°, vor einem oberen Totpunkt bewirkt wird.

14. Verfahren nach einem der Ansprüche 10 bis 13,
**dadurch gekennzeichnet,**
**dass** die Unterdruckpumpe (25) mit maximaler Pumpleistung betrieben wird, wenn eine Kenngröße für eine Motorleistung, insbesondere ein Ladedruck des Verbrennungsmotors (50), einen vorgegebenen Schwellwert erreicht, und dass zusätzlich die Luftpumpe (35) betrieben wird, welche Luft in den Vergasungstank (30) hinein pumpt, wenn die Kenngröße über den vorgegebenen Schwellwert steigt.

## Claims

1. Vehicle drive system comprising
an internal combustion engine (50) for driving a vehicle,
wherein the internal combustion engine (50) comprises a combustion chamber (52) with injectors for injecting diesel into the combustion chamber (52),
a supply line (38) for delivering a gas mixture to the combustion chamber (52),
an electrolysis chamber (20) for producing hydrogen gas and oxygen gas, and
a vacuum pump (25) for sucking the hydrogen gas and the oxygen gas from the electrolysis chamber (20),
**characterised in that**
a gasification tank (30) with volatile organic compounds received therein, in particular methanol or ethanol, is provided,
an air pump (35) for pumping air into the gasification tank (30) is provided and
the gas mixture comprises gasified organic compounds from the gasification tank (30) and at least a part of the hydrogen gas and the oxygen gas.

2. Vehicle drive system according to claim 1,
**characterised in that**
the vacuum pump (25) and the gasification tank (30) are arranged in such a way that the hydrogen gas and the oxygen gas can be conveyed at least in part by the vacuum pump (25) from the electrolysis chamber (20) into the gasification tank (30) in order to produce the gas mixture.

3. Vehicle drive system according to one of claims 1 to 2,
**characterised in that**
the electrolysis chamber (20) and a line system from the electrolysis chamber (20) to the gasification tank (30) are formed such that hydrogen gas and oxygen gas can be conveyed unseparated as oxyhydrogen.

4. Vehicle drive system according to one of claims 1 to 3,
**characterised in that**
a turbocharger (40) is provided,
the supply line (38) is designed such that the gas mixture can be guided via a compressor (42) of the turbocharger (40) to the combustion chamber (52).

5. Vehicle drive system according to one of claims 1 to 4,
**characterised in that**
the hydrogen gas and oxygen gas guided into the gasification tank (30) are introduced via a plurality of nozzles in a lower part of the gasification tank (30).

6. Vehicle drive system according to one of claims 1 to 5,
**characterised in that**
an exhaust filter (60) for purifying exhaust gases is provided,
a separating means is present for separating the hydrogen gas and the oxygen gas, which can be produced in the electrolysis chamber (20), a line (62) for guiding a proportion of the oxygen gas to the exhaust filter (60) is present,
wherein the gas mixture guided by the supply line (38) to the combustion chamber (52) comprises the rest of the oxygen gas and the hydrogen gas as well as the gasified organic compounds.

7. Vehicle drive system according to one of claims 1 to 6,
**characterised in that**
the electrolysis chamber (20) is supplied with an electric current, through which the hydrogen gas and the oxygen gas are obtained in the electrolysis chamber (20), and
control means (10) are present and designed to control the electric current and / or a water introduction into the electrolysis chamber (20) and / or to control a pumping power of the vacuum pump (25) as a function of a momentary property of an internal combustion engine operation.

8. Vehicle drive system according to claim 7,
**characterised in that**
the control means (10) are designed to use a boost pressure of the internal combustion engine (50) as a momentary property of the internal combustion engine operation, in dependence on which the electric current, the water introduction and / or the pumping power are controlled, and
the control means (10) are designed to adjust the electric current and the pumping power to be greater, the higher the boost pressure is.

9. Land vehicle,
comprising a vehicle drive system according to one of claims 1 to 8.

10. Method for operating a vehicle drive system,
wherein a vehicle is driven with an internal combustion engine (50),
wherein diesel is injected by means of injectors into a combustion chamber (52) of the internal combustion engine (50),
wherein hydrogen gas and oxygen gas are produced in an electrolysis chamber (20),
wherein the hydrogen gas and the oxygen gas are sucked out of the electrolysis chamber (20) with a vacuum pump (25),
**characterised in that**
volatile organic compounds, in particular methanol or ethanol, are gasified in a gasification tank (30),
air is pumped with an air pump (35) into the gasification tank (30) and
a gas mixture comprising gasified organic compounds and at least a part of the hydrogen gas and the oxygen gas is guided into the combustion chamber (52).

11. Method according to claim 10,
**characterised in that**
a vacuum is generated in the electrolysis chamber (20) through the vacuum pump (25), producing in particular a pressure of below 1 bar, in particular between 200 mbar and 700 mbar, in particular between 300 mbar and 600 mbar.

12. Method according to claim 10 or 11,
**characterised in that**
the vacuum pump (25) sucks so much gas out of the electrolysis chamber (20) that, during the operation of the electrolysis chamber (20), at most a quarter of the electrolysis chamber is filled with gas.

13. Method according to one of claims 10 to 12,
**characterised in that**
an ignition timing is brought about at a crankshaft angle of less than 20°, in particular between 17° and 19°, in particular between 17.5° and 18.5°, before top dead centre.

14. Method according to one of claims 10 to 13,
**characterised in that**
the vacuum pump (25) is operated with maximum pumping power if a parameter for an engine power, in particular a boost pressure of the internal combustion engine (50), reaches a predefined threshold value, and
the air pump (35) is additionally operated, which pumps air into the gasification tank (30), if the parameter increases over the predefined threshold value.

## Revendications

1. Système de propulsion de véhicule avec
un moteur à combustion (50) pour propulser un véhicule,
tandis que le moteur à combustion (50) comprend une chambre de combustion (52) avec des injecteurs pour l'injection de diesel dans la chambre de combustion (52), une conduite d'alimentation (38) pour conduire un mélange gazeux vers la chambre de combustion (52),
une chambre d'électrolyse (20) pour générer de l'hydrogène gazeux et de l'oxygène gazeux et
une pompe à vide (25) pour aspirer l'hydrogène gazeux et l'oxygène gazeux de la chambre d'électrolyse (20),
**caractérisé en ce que**
une cuve de gazéification (30) avec des composés organiques volatiles, en particulier du méthanol et de l'éthanol, contenus à l'intérieur est prévue,
une pompe à air (35) est disponible pour pomper l'air vers la cuve de gazéification (30) et
le mélange gazeux comprend des composés organiques gazéifiés provenant de la cuve de gazéification (30) ainsi qu'au moins une partie de l'hydrogène gazeux et de l'oxygène gazeux.

2. Système de propulsion de véhicule selon la revendication 1,
**caractérisé en ce que**
la pompe à vide (25) et la cuve de gazéification (30) sont agencés de telle sorte que l'hydrogène gazeux et l'oxygène gazeux sont au moins en partie transportables via la pompe à vide (25) de la chambre d'électrolyse (20) vers la cuve de gazéification (30), pour produire le mélange gazeux.

3. Système de propulsion de véhicule selon une des revendications 1 à 2,
**caractérisé en ce que**
la chambre d'électrolyse (20) et un système de conduite de la chambre d'électrolyse (20) à la cuve de gazéification (30) sont constitués de sorte que l'hydrogène gazeux et l'oxygène gazeux sont transportables de manière non séparée en tant que gaz explosifs.

4. Système de propulsion de véhicule selon une des revendications 1 à 3,
**caractérisé en ce que**
un turbocompresseur (40) est disponible,
la conduite d'alimentation (38) est constituée de sorte que le mélange gazeux peut être dirigé, via un compresseur (42) du turbocompresseur (40), vers la chambre de combustion (52).

5. Système de propulsion de véhicule selon une des revendications 1 à 4,
**caractérisé en ce que**
l'hydrogène gazeux et l'oxygène gazeux conduits vers la vue de gazéification (30) sont introduits, via plusieurs buses dans une partie inférieure de la cuve de gazéification (30).

6. Système de propulsion de véhicule selon une des revendications 1 à 5,
**caractérisé en ce que**
un filtre de gaz d'échappement (60) est disponible pour le nettoyage des gaz d'échappement,
un moyen de séparation est disponible pour la séparation de l'hydrogène gazeux et de l'oxygène gazeux, lesquels peuvent être générés dans la chambre d'électrolyse (20),
une conduite (62) pour conduire une part de l'oxygène gazeux jusqu'au filtre de gaz d'échappement (60) est disponible,
tandis que le mélange gazeux conduit de la conduite d'alimentation (38) vers la chambre à combustion (52) comprend le reste de l'oxygène gazeux et de l'hydrogène gazeux ainsi que les composés organiques gazéifiés.

7. Système de propulsion de véhicule selon une des revendications 1 à 6,
**caractérisé en ce que**
la chambre d'électrolyse (20) est approvisionnée avec un courant électrique par le biais duquel l'hydrogène gazeux et l'oxygène gazeux sont obtenus dans la chambre d'électrolyse (20), et
des moyens de commande (10) sont disponibles et configurés pour guider le courant électrique et/ou une conduite d'eau vers la chambre d'électrolyse (20) et/ou une puissance de pompage de la pompe à vide (25), indépendamment d'une propriété actuelle d'un fonctionnement de moteur à combustion.

8. Système de propulsion de véhicule selon la revendication 7,
**caractérisé en ce que**
les moyens de commande (10) sont configurés pour utiliser une pression d'alimentation du moteur à combustion (50), en tant que propriété actuelle du fonctionnement du moteur à combustion, indépendamment duquel le courant électrique, la conduite d'eau et/ou la puissance de pompage sont guidés, et les moyens de commande (10) sont configurés pour que le courant électrique et la puissance de pompage puissent être augmentés en fonction de l'augmentation de la pression d'alimentation.

9. Véhicule terrestre
avec un système de propulsion de véhicule selon une des revendications 1 à 8.

10. Procédé pour le fonctionnement d'un système de propulsion de véhicule, pour lequel un véhicule est propulsé avec un moteur à combustion (50), pour lequel du diesel est injecté, via des buses d'injection, dans une chambre de combustion (52) du moteur à combustion (50),
pour lequel de l'hydrogène gazeux et de l'oxygène gazeux sont générés dans une chambre d'électrolyse (20),
pour lequel l'hydrogène gazeux et l'oxygène gazeux sont aspirés de la chambre d'électrolyse (20) avec une pompe à vide (25),
**caractérisé en ce que**
dans une cuve de gazéification (30), des composés organiques volatiles, en particulier du méthanol et de l'éthanol, sont gazéifiés,
de l'air est pompé dans la cuve de gazéification (30) avec une pompe à air (35) et
un mélange gazeux, qui comprend des composés organiques gazéifiés ainsi que tout au moins une partie de l'hydrogène gazeux et de l'oxygène gazeux, est conduit dans la chambre à combustion (52).

11. Procédé selon la revendication 10,
**caractérisé en ce que**
une dépression est générée dans la chambre d'électrolyse (20) par le biais de la pompe à vide (25), en particulier une pression inférieure à 1 bar, en particulier entre 200 mbar et 700 mbar, en particulier entre 300 mbar et 600 mbar.

12. Procédé selon la revendication 10 ou 11,
**caractérisé en ce que**
la pompe à vide (25) aspire tellement de gaz de la chambre d'électrolyse (20) que, dans le cadre du fonctionnement de la chambre d'électrolyse (20), maximum un quart de la chambre d'électrolyse est remplie de gaz.

13. Procédé selon une des revendications 10 à 12,
**caractérisé en ce que**
un moment d'allumage est déclenché pour un angle de vilebrequin de moins de 20°, en particulier entre 17° et 19°, en particulier entre 17,5° et 18,5°, avant un point mort haut.

14. Procédé selon une des revendications 10 à 13,
**caractérisé en ce que**
la pompe à vide (25) est mise en fonctionnement avec une puissance de pompage maximale, lorsqu'un paramètre pour une puissance du moteur, en particulier une pression d'alimentation du moteur à combustion (50), atteint une valeur seuil prédéterminée et que, en plus,
est mise en fonctionnement la pompe à air (35), qui pompe de l'air dans la cuve de gazéification (30), lorsque le paramètre dépasse la valeur seuil prédéterminée.
